# EUROPEAN PATENT APPLICATION

(11) **EP 3 567 338 A1**
(43) Date of publication of application: **13.11.2019**
(21) Application number: 18752050.7
(22) Date of filing: 26.01.2018
(51) Int. Cl.: G01B 11/00, G01B 11/26, G01C 15/06

(54) **MARKER**

(30) Priority: 10.02.2017 JP 2017022818
(71) Applicant: Enplas Corporation, Kawaguchi-shi, Saitama 332-0034 (JP)
(72) Inventor: KAWAKAMI Mitsuru, Kawaguchi-shi Saitama 332-0034 (JP); FUKUDA Yasuyuki, Kawaguchi-shi Saitama 332-0034 (JP)
(74) Representative: J A Kemp LLP
(86) International application number: PCT/JP2018/002424
(87) International publication number: WO 2018/147093

(57) **Abstract**

The present invention provides a new marker whose orientation can be determined when it is detected by the detection device, without requiring the AR or the VMP. The marker of the present invention includes: a substrate, wherein the substrate has at least four circle symbols on one surface, two of the four circle symbols are paired and diagonally positioned on the surface, the other two of the four circle symbols are paired and diagonally positioned on the surface, and the four circle symbols satisfy the following condition (1) or (2):
Condition (1): one of the four circle symbols is detected to be larger than the other circle symbols in any rotation state of the marker when the marker positioned at a predetermined distance from a predetermined detection position is detected; or
Condition (2): one of the pair of circle symbols and one of the other pair of circle symbols have the same size and are detected to be larger than the other circle symbols in any rotation state of the marker when the marker positioned at a predetermined distance from a predetermined detection position is detected.

## Description

### TECHNICAL FIELD

The present invention relates to a marker.

### BACKGROUND ART

In the fields of augmented reality (also referred to as "AR" hereinafter), robotics, etc., a so-called visual marker is used to recognize the position, the orientation, and the like of an object. As the marker, for example, an AR marker that is a two-dimensional code is commonly used. The AR marker is generally represented graphically on a substrate. When the AR marker is detected by a detection device such as a camera, the image of the graphic detected by the detection device changes depending on the inclination of the AR marker with respect to the detection device. Based on the changed image, the inclination angle (rotation angle) of the AR marker with respect to the detection device is detected. However, there is a problem that the detection accuracy of the inclination angle is insufficient with the AR marker alone.

On the other hand, a high-accuracy marker on which a variable moiré pattern (VMP) excellent with detection accuracy is arranged has been reported. With the VMP, the shape and position of an image appearing are displaced in accordance with an angle seen from the detection device. Generally, the high-accuracy marker has circle symbols serving as measurement references at four corners of a square substrate, and the VMP is arranged in a region surrounded by the four circle symbols. In the high-accuracy marker, first, measurement reference circle symbols at four corners are detected, thereby grasping a measurement region, and subsequently, the VMP in the measurement region is detected. However, although the detection accuracy of the angle is improved by the measurement references, the rotation angle may be lost.

Therefore, a marker in which the function of the AR marker, the VMP, and the measurement reference are provided has also been reported (Patent Literature 1). However, there is a problem that, with such a marker, the orientation thereof cannot be determined only based on the image when the marker is detected by the detection device.

### Citation List

### Patent Literature

Patent Literature 1: JP 2012-145559 A

### SUMMARY OF INVENTION

### Technical Problem

With the foregoing in mind, it is an object of the present invention to provide a new marker whose orientation can be determined when it is detected by the detection device, without requiring the function of the AR marker or the VMP, for example.

### Solution to Problem

In order to achieve the above object, the present invention provides a marker including: a substrate, wherein the substrate has at least four circle symbols on one surface, two of the four circle symbols are paired and diagonally positioned on the surface, the other two of the four circle symbols are paired and diagonally positioned on the surface, and the four circle symbols satisfy the following condition (1) or (2):
Condition (1): one of the four circle symbols is detected to be larger than the other circle symbols in any rotation state of the marker when the marker positioned at a predetermined distance from a predetermined detection position is detected; or
Condition (2): one of the pair of circle symbols and one of the other pair of circle symbols have the same size and are detected to be larger than the other circle symbols in any rotation state of the marker when the marker positioned at a predetermined distance from a predetermined detection position is detected.

### Advantageous Effects of Invention

According to the marker of the present invention, by satisfying the condition (1) or (2) as described above, the orientation of the marker can be accurately determined with as few as least four circle symbols.

### BRIEF DESCRIPTION OF DRAWINGS

[FIG. 1] FIG. 1 is a plan view of a marker according to the first embodiment.
[FIGs. 2A to 2C] FIGs. 2A to 2C are plan views of the marker according to the first embodiment.
[FIG. 3] FIG. 3 is a schematic diagram showing the change of the circle symbols of the marker in the first embodiment.
[FIG. 4] FIG. 4 is a graph showing the relationship between the relative value (%) of the rotated visual size and the observation distance D in the first embodiment.
[FIG. 5] FIG. 5 is a graph showing the relationship between the relative value (%) of the rotated visual size and the observation distance D in the first embodiment.
[FIG. 6] FIG. 6 is a graph showing the relationship between the relative value (%) of the rotated visual size and the observation distance D in the first embodiment.
[FIG. 7] FIG. 7 is a graph showing the relationship between the relative value (%) of the rotated visual size and the inter-circle distance d in the first embodiment.
[FIG. 8] FIG. 8 is a graph showing the relationship between the relative value (%) of the rotated visual size and the inter-circle distance d in the first embodiment.
[FIG. 9] FIG. 9 is a plan view of a marker according to the second embodiment.
[FIGs. 10A to 10C] FIGs. 10A to 10C are plan views of the marker according to the second embodiment.

### DESCRIPTION OF EMBODIMENTS

In the marker of the present invention, for example, the four circle symbols satisfy the condition (1), and, except for the one circle symbol, the other circle symbols are all of the same size on the surface.

In the marker of the present invention, for example, the four circle symbols satisfy the condition (2), and, except for the one circle symbol of the pair and the one circle symbol of the other pair, the other circle symbols are of the same size on the surface.

In the marker of the present invention, examples of the shape of the circle symbol include a perfect circle and an ellipse, and is preferably a perfect circle. In the marker of the present invention, it is preferable that the four circle symbols positioned on the same surface have the same shape. The same shape means that the shapes are the same regardless of the size, and that the four circles are of completely the same shape or have similar shapes the same in shape but different in size, for example, as long as the condition (1) or condition (2) is satisfied.

Embodiments of the present invention are described below with reference to the drawings. The present invention is in no way limited or restricted by the following embodiments. In the drawings, identical parts are indicated with identical reference signs. Furthermore, for convenience in explanation, the structure of each component may be appropriately simplified, and the size, the ratio, and the like of components are not limited to the conditions of the drawings.

### [First embodiment]

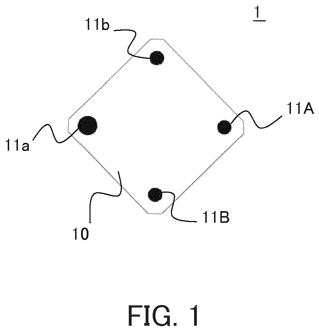

The first embodiment is an example of a marker of the present invention satisfying the condition (1). FIG. 1 shows an example of a marker of the present embodiment. FIG. 1 is a plan view of a marker 1.

As shown in FIG. 1, the marker 1 includes a substrate 10 and has four circle symbols 11a, 11A, 11b, and 11B on one surface of the substrate. Of the four circle symbols, two circle symbols 11a and 11A are paired and diagonally positioned on the surface, and the other two circle symbols 11b and 11B are paired and diagonally positioned on the surface. The four circle symbols satisfy the following condition (1).

Condition (1): one circle symbol X of the four circle symbols is detected to be larger than the other circle symbols in any rotation state of the marker when the marker positioned at a predetermined distance from a predetermined detection position is detected.

In the present invention, for convenience, the size of the actual circle symbol on the substrate of the marker is referred to as the "actual size", the size of the circle symbol which is visually recognized (detected) from the detection position in a state in which the detection position is on the normal line of the substrate of the marker and the marker is not rotated is referred to as the "unrotated visual size", and the size of the circle symbol which is visually recognized (detected) from the detection position in a state in which the marker is rotated is referred to as the "rotated visual size".

In the present invention, "diagonally positioned on the surface" refers to a positional relationship between the circle symbols, and is not limited by the shape of the substrate (for example, the outer shape of the substrate). In the case of the marker 1 of FIG. 1, the positional relationship is satisfied as long as the two circle symbols 11a and 11A and the other two circle symbols 11b and 11B are diagonally positioned in a shape formed by connecting adjacent circle symbols with the four circle symbols as vertices, for example. In the present invention, the outer shape of the substrate is not limited in any way.

The condition (1) is a condition when a marker positioned at a predetermined distance from a predetermined detection position is detected. It is to be noted that, the reference of the condition (1) is a state in which the planar direction of the substrate of the marker faces the predetermined detection position. Specifically, for example, the reference of the condition (1) can be a state in which the surface of the substrate having the circle symbols faces the detection position, and the detection axis from the predetermined detection position toward the marker and the planar direction of the substrate intersect with each other. In this reference, one circle symbol X is detected to be larger than the other circle symbols in any rotation state of the marker. If the four circle symbols satisfy the condition (1), the circle symbol X of the four circle symbols can be recognized no matter how the marker 1 rotates. Therefore, according to the marker 1 of the present embodiment, the orientation of the marker 1 can be easily determined by detecting the circle symbol X.

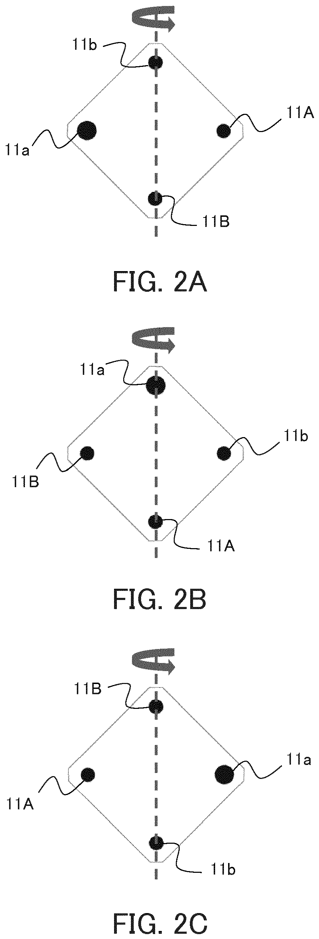

In FIG. 1, the circle symbol X is a circle symbol 11a having the largest actual size. The condition (1) will be further described with reference to FIGs. 2A to 2C. FIGs. 2A to 2C are schematic views each showing a state in which the orientation of the marker 1 is to be changed with respect to the rotation axis. In each drawing of FIGs. 2A to 2C, the dotted line indicates the rotation axis, and the arrow indicates the rotation direction. In addition, each drawing of FIGs. 2A to 2C shows the relationship between the marker 1 and the detection position, specifically, a state in which the detection position is on the normal line of the marker 1, i.e., a state in which the marker 1 is not rotated with respect to the detection position. Hereinafter, the direction parallel to the rotation axis is referred to as the "perpendicular direction" or "vertical direction", and the direction along the rotation direction is referred to as the "horizontal direction" or "lateral direction".

FIG. 2A shows the marker 1 of FIG. 1 in a state in which the circle symbol 11a (circle symbol X) is positioned in the horizontal direction. In this case, when the circle symbol 11a comes in front of the unrotated position due to the rotation of the marker 1, the rotated visual size of the circle symbol 11a becomes larger than the unrotated visual size of the circle symbol 11a. On the other hand, the rotated visual sizes of the circle symbols 11b and 11B on the rotation axis do not change from the unrotated visual sizes thereof. The unrotated visual size of the other circle symbol 11A in the horizontal direction is smaller than the unrotated visual size of the circle symbol 11a, and the circle symbol 11A comes behind the unrotated position due to the rotation, so that the rotated visual size of the circle symbol 11A becomes smaller than the unrotated visual size thereof. Therefore, in this rotation state, it is only required that at least the actual size of the circle symbol 11a is larger than the actual sizes of the other circle symbols, for example. Thereby, the circle symbol 11a can be specified from the four circle symbols.

FIG. 2B shows the marker 1 of FIG. 1 in a state in which the circle symbol 11a (circle symbol X) is positioned on the rotation axis. In this case, even by the rotation of the marker 1, the rotated visual sizes of the circle symbol 11a and the circle symbol 11A diagonal to the circle symbol 11a do not change from the respective unrotated visual sizes thereof. On the other hand, when one of the circle symbols 11b and 11B diagonal to each other in the horizontal direction comes in front of the unrotated position due to the rotation of the marker 1, the rotated visual size of the one of the circle symbols 11b and 11B becomes larger than the unrotated visual size thereof. Therefore, in a rotation state in which the circle symbols 11b and 11B in the horizontal direction have the largest rotated visual sizes, it is only required that the rotated visual size of the circle symbol 11a is larger than the rotated visual sizes of the circle symbols 11b and 11B for example. Thereby, the circle symbol 11a can be specified from the four circle symbols.

FIG. 2C shows the marker 1 of FIG. 1 in a state in which the circle symbol 11a (circle symbol X) is positioned in the horizontal direction. In this case, when the circle symbol 11a comes behind the unrotated position due to the rotation of the marker 1, the rotated visual size of the circle symbol 11a becomes smaller than the unrotated visual size. On the other hand, the rotated visual sizes of the circle symbols 11b and 11B on the rotation axis do not change from the unrotated visual sizes thereof, and the other circle symbol 11A in the horizontal direction comes in front of the unrotated position due to the rotation, so that the rotated visual size of the circle symbol 11A becomes larger than the unrotated visual size thereof. Therefore, in a rotation state in which the other circle symbol 11A in the horizontal direction has the largest rotated visual size, it is only required that the rotated visual size of the circle symbol 11 a is larger than the rotated visual size of the circle symbol 11A and also larger than the rotated visual sizes of the circle symbols 11b and 11B on the rotation axis, for example. Thereby, the circle symbol 11a can be specified from the four circle symbols.

When the circle symbol 11a of marker 1 satisfies the aforementioned sizes in the rotation states of FIGs. 2A, 2B, and 2C as described above, it can be said that the marker 1 is in a state satisfying the condition (1).

The important point of the present invention is to satisfy the condition (1). The marker satisfying the condition (1) can be designed, for example, by determining the size of the circle symbol 11a in accordance with the distance between the detection position and the marker and the distance between the diagonally positioned circle symbols as follows. An example of the method of determining the size of the circle symbol 11a will be described below. The present invention, however, is not limited thereto.

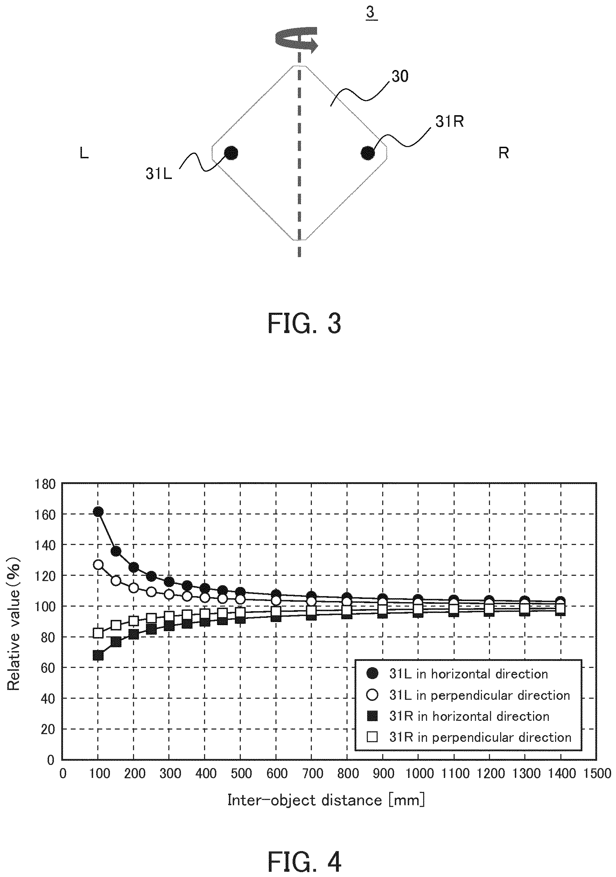

As shown in FIGs. 2A to 2C, in the marker 1, the rotated visual sizes of a pair of circle symbols diagonally positioned in the horizontal direction change due to the rotation. Hence, the change of the rotated visual size of the circle symbol in the marker due to the rotation is simulated. FIG. 3 shows a marker 3 for simulation. In the marker 3, a pair of circle symbols 31L and 31R are arranged on the substrate 30 at the corners in the horizontal direction, and the actual sizes of the circle symbols 31L and 31R are the same (the same in diameter). It is to be noted that the front side of FIG. 3 is a side on which a detection device such as a camera for visually recognizing the marker 3 is disposed. The state shown in FIG. 3 is a state in which the plane having the circle symbols of the marker 3 faces the detection device. Since the normal line of the marker 3 and the line connecting the center of the plane of the marker 3 and the detection position (detection device) are parallel to each other, the rotation angle of the marker 3 with respect to the detection position is 0°.

Then, the distance (d) between the circle centers of the circle symbols 31L and 31R in the marker 3 is set to a predetermined distance, the distance (D) between the marker 3 and the detection position (also referred to as a visual recognition position) is set to a predetermined distance, and the unrotated visual sizes and the rotated visual sizes of the circle symbols 31L and 31R are calculated, thereby obtaining the relative value of the change of the visual size. Specifically, for each of the circle symbols 31L and 31R in the marker 3, the unrotated visual size at the rotation angle of 0° is set to 100%. Next, the relative values Y% of the rotated visual sizes of the circle symbols 31L and 31R in a state in which the marker 3 is rotated by a maximum of 80° in the right direction R and in a state in which the marker 3 is rotated by a maximum of 80° in the left direction L are obtained. The unrotated visual size and the rotated visual size may be represented by, for example, an area or a diameter. Examples of the diameter include a perpendicular diameter along the rotation axis and a horizontal diameter. It is to be noted that, when the marker 3 is rotated by 90°, the surface of the marker 3 cannot be seen from the detection position, and thus the angle of rotation is set to, for example, less than 90°, and in this example, is set to, for example, 80°. The position of the rotation angle 0° may be also referred to, for example, as a front-facing position, and the relative value may be also referred to as a relative value to a horizontal diameter or a perpendicular diameter at the front-facing position (also referred to as a central ratio).

The results are shwon in FIG. 4. FIG. 4 shows a simulation result in which the distance d (hereinafter, also referred to as an inter-circle distance) between the circle centers of the circle symbols 31L and 31R in the marker 3 is set to 31 mm. In FIG. 4, the vertical axis indicates the relative value (%) of the rotated visual size, and the horizontal axis indicates the distance D (mm) between the marker and the detection position. In FIG. 4, each solid circle indicates a relative value of the diameter of the circle symbol 31L in the horizontal direction (lateral direction), each open circle indicates a relative value of the diameter of the circle symbol 31L in the perpendicular direction (vertical direction), each solid square indicates a relative value of the diameter of the circle symbol 31R in the horizontal direction (lateral direction), and each open square indicates a relative value of the diameter of the circle symbol 31R in the perpendicular direction (vertical direction). As shown in FIG. 4, the closer the distance D between the marker and the detection position is, the larger the relative value Y (%) becomes.

When the inter-circle distance d is 31 mm, the size of the marker 1 shown in FIGs. 1 and 2A to 2C, i.e., the length in the perpendicular direction and the length in the horizontal direction of the marker 1 are, for example, each about 40 mm. When the marker 1 is detected from the detection position, for example, it is necessary to detect the entire marker 1, and the shortest distance between the marker 1 and the detection position for this purpose can be assumed to be "the length of the marker (about 40 mm) × 5". On the other hand, when the marker 1 is detected, for example, it is necessary to ensure its accuracy, and the longest distance between the marker 1 and the detection position for this purpose can be assumed to be "the length of the marker (about 40 mm) × 50". Therefore, in FIG. 4, the distance D between the marker 3 and the detection position indicated by the horizontal axis can be set to, for example, 200 mm to 2000 mm. In FIG. 4, in the range of the distance D of 200 mm to 1400 mm, assuming that the unrotated visual size at the rotation angle of 0° is 100%, the minimum value of the relative value Y (%) is 81.7%, the maximum value of the relative value Y (%) is 125.3%, and the change width which is the difference therebetween is 43.6%. That is, in the range of the distance D of 200 mm to 1400 mm, the rotated visual size of the circle symbol changes by 43.6% between the maximum and minimum. Therefore, in the marker 1 shown in FIGs. 1 and 2A to 2C, by setting the diameter of the circle symbol 11a so as to exceed the change width of 43.6% with respect to the diameters of the other circle symbols, the marker 1 satisfying the condition (1) can be achieved. The diameter of the circle symbol 11a preferably exceeds the change width. As a specific example, the diameter of the circle symbol 11a preferably exceeds the change width (%) by +10%, for example.

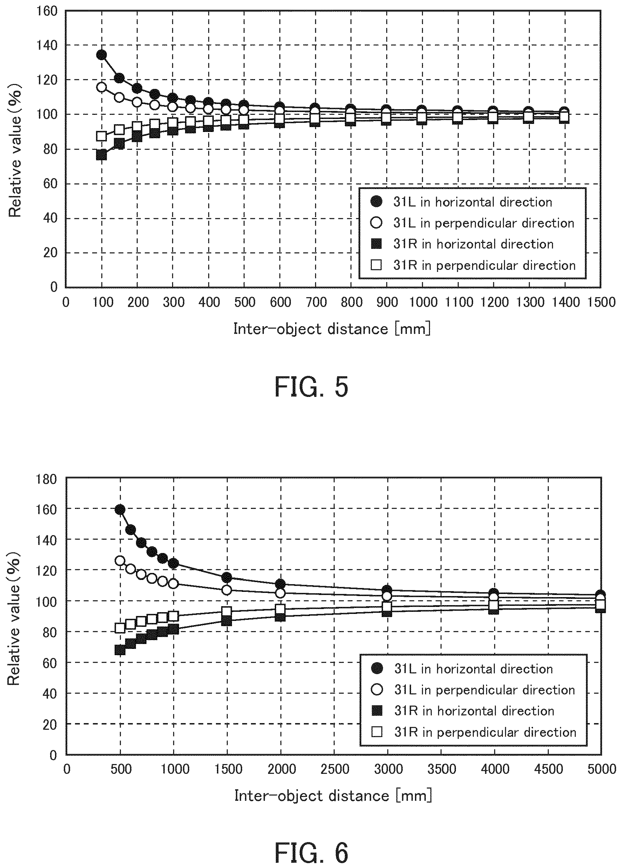

Next, FIG. 5 shows a simulation result in which the distance d (inter-circle distance) between the circle centers of the circle symbols 31L and 31R in the marker 3 is set to 20 mm. In FIG. 5, the vertical axis indicates the relative value (%) of the rotated visual size, and the horizontal axis indicates the distance D (mm) between the marker and the detection position. In FIG. 5, each solid circle indicates a relative value of the diameter of the circle symbol 31L in the horizontal direction (lateral direction), each open circle indicates a relative value of the diameter of the circle symbol 31L in the perpendicular direction (vertical direction), each solid square indicates a relative value of the diameter of the circle symbol 31R in the horizontal direction (lateral direction), and each open square indicates a relative value of the diameter of the circle symbol 31R in the perpendicular direction (vertical direction). As shown in FIG. 5, the closer the distance D between the marker and the detection position is, the larger the relative value Y (%) becomes.

When the inter-circle distance d is 20 mm, the size of the marker 1 shown in FIGs. 1 and 2A to 2C, i.e., the length in the perpendicular direction and the length in the horizontal direction of the marker 1 are, for example, each about 30 mm. Thus, the shortest distance between the marker 1 and the detection position (visual recognition position) can be assumed to be "the length of the marker (about 30 mm) × 5", and the longest distance between the marker 1 and the detection position can be assumed to be "the length of the marker (about 30 mm) × 50". Therefore, in FIG. 5, the distance D between the marker 3 and the detection position indicated by the horizontal axis can be set to, for example, 150 mm to 1500 mm. In FIG. 5, in the range of the distance D of 150 mm to 1500 mm, the minimum value of the relative value Y% is 83.7%, the maximum value of the relative value Y% is 121.5%, and the change width which is the difference therebetween is 37.8%. That is, in the range of the distance D of 150 mm to 1500 mm, the rotated visual size of the circle symbol changes by 37.8% between the maximum and minimum. Therefore, in the marker 1 shown in FIGs. 1 and 2A to 2C, by setting the diameter of the circle symbol 11a so as to exceed the change width of 37.8% with respect to the diameters of the other circle symbols, the marker 1 satisfying the condition (1) can be achieved. The diameter of the circle symbol 11a preferably exceeds the change width, for example. As a specific example, the diameter of the circle symbol 11a preferably exceeds the change width (%) by +10%, for example.

Next, FIG. 6 shows a simulation result in which the distance d (inter-circle distance) between the circle centers of the circle symbols 31 L and 31R in the marker 3 is set to 175 mm. In FIG. 6, the vertical axis indicates the relative value (%) of the rotated visual size, and the horizontal axis indicates the distance D (mm) between the marker and the detection position. In FIG. 6, each solid circle indicates a relative value of the diameter of the circle symbol 31L in the horizontal direction (lateral direction), each open circle indicates a relative value of the diameter of the circle symbol 31L in the perpendicular direction (vertical direction), each solid square indicates a relative value of the diameter of the circle symbol 31R in the horizontal direction (lateral direction), and each open square indicates a relative value of the diameter of the circle symbol 31R in the perpendicular direction (vertical direction). As shown in FIG. 6, the closer the distance D between the marker and the detection position is, the larger the relative value Y (%) becomes.

When the inter-circle distance d is 175 mm, the size of the marker 1 shown in FIGs. 1 and 2A to 2C, i.e., the length in the perpendicular direction and the length in the horizontal direction of the marker 1 are, for example, each about 200 mm. Thus, the shortest distance between the marker 1 and the detection position can be assumed to be "the length of the marker (about 200 mm) × 5", and the longest distance between the marker 1 and the detection position can be assumed to be "the length of the marker (about 200 mm) × 50". Therefore, in FIG. 6, the distance D between the marker 3 and the detection position indicated by the horizontal axis can be set to, for example, 1000 mm to 10000 mm. In FIG. 6, in the range of the distance D of 1000 mm to 10000 mm, the minimum value of the relative value Y% is 82.0%, the maximum value of the relative value Y% is 124.6%, and the change width which is the difference therebetween is 42.6%. That is, in the range of the distance D of 1000 mm to 10000 mm, the rotated visual size of the circle symbol changes by 42.6% between the maximum and minimum. Therefore, in the marker 1 shown in FIGs. 1 and 2A to 2C, by setting the diameter of the circle symbol 11a so as to exceed the change width of 42.6% with respect to the diameters of the other circle symbols, the marker 1 satisfying the condition (1) can be achieved. The diameter of the circle symbol 11a preferably exceeds the change width, for example. As a specific example, the diameter of the circle symbol 11a preferably exceeds the change width (%) by +10%, for example.

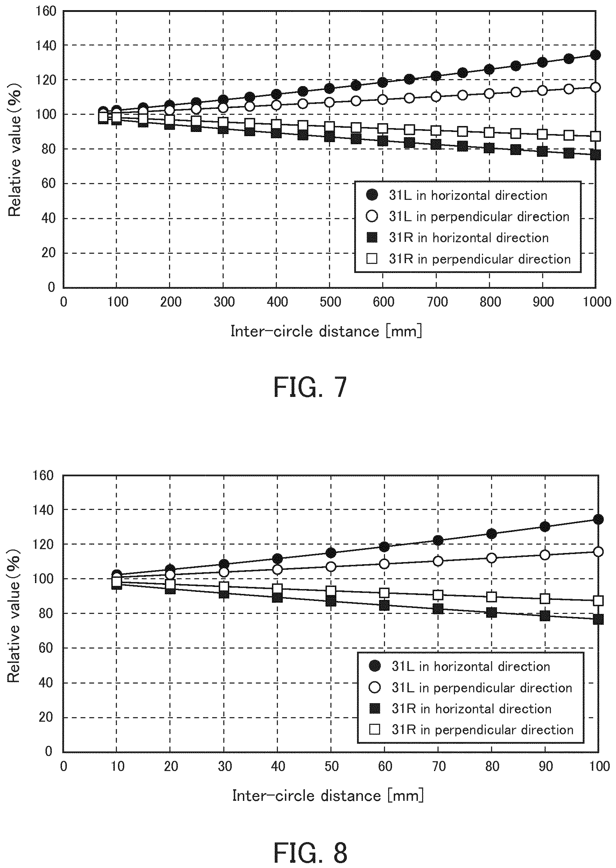

Next, FIG. 7 shows a simulation result in which the distance D (hereinafter, also referred to as an observation distance) between the marker 3 and the detection position is set to 5000 mm. In FIG. 7, the vertical axis indicates the relative value (%) of the rotated visual size, and the horizontal axis indicates the inter-circle distance d (mm). In FIG. 7, each solid circle indicates a relative value of the diameter of the circle symbol 31L in the horizontal direction (lateral direction), each open circle indicates a relative value of the diameter of the circle symbol 31L in the perpendicular direction (vertical direction), each solid square indicates a relative value of the diameter of the circle symbol 31R in the horizontal direction (lateral direction), and each open square indicates a relative value of the diameter of the circle symbol 31R in the perpendicular direction (vertical direction). As shown in FIG. 7, the larger the inter-circle distance d is, the larger the relative value Y (%) becomes.

When the observation distance D is 5000 mm, the size of the marker 1 shown in FIGs. 1 and 2A to 2C, that is, the length in the perpendicular direction and the length in the horizontal direction of the marker 1 are, for example, each about 100 to 1000 mm, so that the inter-circle distance d can be set to, for example, 80 mm to 800 mm. In FIG. 7, in the range of the inter-circle distance d from 80 mm to 800 mm, the minimum value of the relative value Y% is 81.0%, the maximum value of the relative value Y% is 126.6%, and the change width which is the difference therebetween is 45.6%. That is, in the range of the inter-circle distance d from 80 mm to 800 mm, the rotated visual size of the circle symbol changes by 45.6% between the maximum and minimum. Therefore, in the marker 1 shown in FIGs. 1 and 2A to 2C, by setting the diameter of the circle symbol 1 1a so as to exceed the change width of 45.6% with respect to the diameters of the other circle symbols, the marker 1 satisfying the condition (1) can be achieved. The diameter of the circle symbol 11a preferably exceeds the change width, for example. As a specific example, the diameter of the circle symbol 11a preferably exceeds the change width (%) by +10%, for example.

Next, FIG. 8 shows a simulation result in which the distance D (observation distance) between the marker 3 and the detection position is set to 500 mm. In FIG. 8, the vertical axis indicates the relative value (%) of the rotated visual size, and the horizontal axis indicates the inter-circle distance d (mm). In FIG. 8, each solid circle indicates a relative value of the diameter of the circle symbol 31L in the horizontal direction (lateral direction), each open circle indicates a relative value of the diameter of the circle symbol 31L in the perpendicular direction (vertical direction), each solid square indicates a relative value of the diameter of the circle symbol 31R in the horizontal direction (lateral direction), and each open square indicates a relative value of the diameter of the circle symbol 31R in the perpendicular direction (vertical direction). As shown in FIG. 8, the larger the inter-circle distance d is, the larger the relative value Y (%) becomes.

When the observation distance D is 500 mm, the size of the marker 1 shown in FIGs. 1 and 2A to 2C, that is, the length in the perpendicular direction and the length in the horizontal direction of the marker 1 are, for example, each about 10 to 100 mm, so that the inter-circle distance d can be set to, for example, 8 mm to 80 mm. In FIG. 8, in the range of the inter-circle distance d from 8 mm to 80 mm, the minimum value of the relative value Y% is 81.0%, the maximum value of the relative value Y% is 126.7%, and the change width which is the difference therebetween is 45.7%. That is, in the range of the inter-circle distance d from 8 mm to 80 mm, the rotated visual size of the circle symbol changes by 45.7% between the maximum and minimum. Therefore, in the marker 1 shown in FIGs. 1 and 2A to 2C, by setting the diameter of the circle symbol 1 1a so as to exceed the change width of 45.7% with respect to the diameters of the other circle symbols, the marker 1 satisfying the condition (1) can be achieved. The diameter of the circle symbol 11a preferably exceeds the change width, for example. As a specific example, the diameter of the circle symbol 11a preferably exceeds the change width (%) by +10%, for example.

In the marker 1, the substrate 10 is, for example, a transparent substrate. In the marker 1, the color of the circle symbol is not particularly limited, and is black, for example.

### [Second embodiment]

The second embodiment is an example of a marker of the present invention satisfying the condition (2).
Condition (2): one of the pair of circle symbols and one of the other pair of circle symbols have the same size and are detected to be larger than the other circle symbols in any rotation state of the marker when the marker positioned at a predetermined distance from a predetermined detection position is detected.

Regarding the marker 2 of the second embodiment, reference can be made to the description of the first embodiment except that one circle symbol (11a) of the pair (11a, 11A) and one circle symbol (11b) of the other pair (11b, 11B) satisfy the aforementioned condition. The former circle symbol and the latter circle symbol can be set so as to satisfy the condition, for example, by the same method as in the first embodiment.

In the marker 2 satisfying the condition (2), the circle symbols 11a and 11b having the same size may be arranged at any position as long as they are not diagonally positioned.

The condition (2) is a condition when a marker positioned at a predetermined distance from a predetermined detection position is detected. It is to be noted that, the reference of the condition (2) is a state in which the planar direction of the substrate of the marker faces the predetermined detection position. Specifically, for example, the reference of the condition (2) can be a state in which the surface of the substrate having the circle symbols faces the detection position, and the detection axis from the predetermined detection position toward the marker and the planar direction of the substrate intersect with each other. In this reference, two circle symbols X having the same size are detected to be larger than the other circle symbols in any rotation state of the marker. If the four circle symbols satisfy the condition (2), each of the two circle symbols X of the four circle symbols can be recognized no matter how the marker 2 rotates. Therefore, according to the marker 2 of the present embodiment, the orientation of the marker can be easily determined by detecting the circle symbols X.

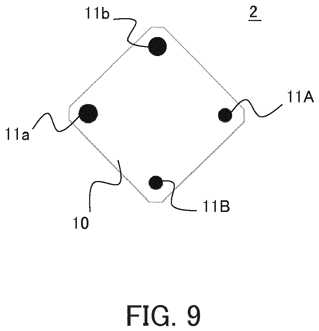

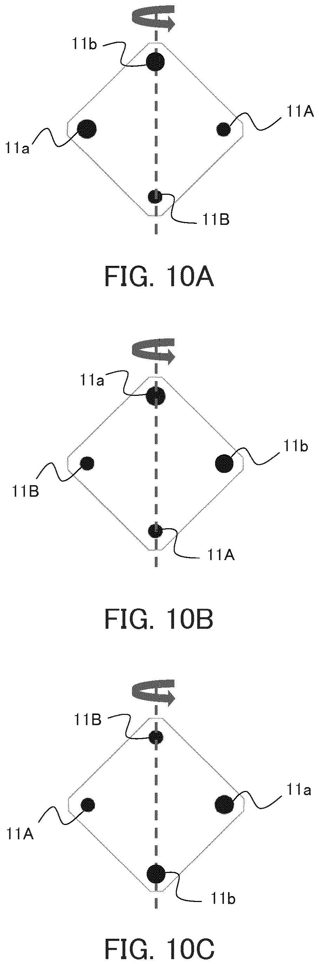

In FIG. 9, the circle symbols X are circle symbols 11a and 11b having the largest actual size. The condition (2) will be further described with reference to FIGs. 10A to 10C. FIGs. 10A to 10C are schematic views each showing a state in which the orientation of the marker 2 is to be changed with respect to the rotation axis. In each drawing of FIGs. 10A to 10C, the dotted line indicates a rotation axis, and the arrow indicates a rotation direction. In addition, each drawing of FIGs. 10A to 10C shows the relationship between the marker 2 and the detection position, specifically a state in which the detection position is on the normal line of the marker 2, that is, a state in which the marker 2 is not rotated with respect to the detection position. Hereinafter, the direction parallel to the rotation axis is referred to as the "perpendicular direction or vertical direction", and the direction along the rotation direction is referred to as the "horizontal direction or lateral direction".

FIG. 10A shows the marker 2 of FIG. 9 in a state in which the circle symbol 11a is positioned in the horizontal direction and the circle symbol 11b is positioned on the rotation axis. In this case, when the circle symbol 11a comes in front of the unrotated position due to the rotation of the marker 2, the rotated visual size of the circle symbol 11a becomes larger than the unrotated visual size thereof. On the other hand, the rotated visual sizes of the circle symbols 11b and 11B on the rotation axis do not change from the unrotated visual sizes thereof. The unrotated visual size of the other circle symbol 11A in the horizontal direction is smaller than the unrotated visual size of the circle symbol 11a, and the circle symbol 11A comes behind the unrotated position due to the rotation, so that the rotated visual size of the circle symbol 11A becomes smaller than the unrotated visual size thereof. Therefore, in this rotation state, it is only required that the actual size of the circle symbol 11a is the same as the actual size of the circle symbol 11b, and also at least the actual sizes of the circle symbols 11a and 11b are larger than the actual sizes of the other circle symbols, for example. Thereby, in this rotation state, the circle symbol 11a is detected as having the largest rotated visual size, and the circle symbol 11b is detected as having the next largest rotated visual size, so that the circle symbols 11a and 11b can be specified from the four circle symbols, thereby determining the orientation of the marker 2.

FIG. 10B shows the marker 2 of FIG. 9 in a state in which the circle symbol 11b is positioned in the horizontal direction and the circle symbol 11a is positioned on the rotation axis. In this case, when the circle symbol 11b comes behind the unrotated position due to the rotation of the marker 2, the rotated visual size of the circle symbol 11b becomes smaller than the unrotated visual size thereof. On the other hand, the rotated visual sizes of the circle symbols 11a and 11A on the rotation axis do not change from the unrotated visual sizes thereof, and the other circle symbol 11B in the horizontal direction comes in front of the unrotated position due to the rotation, so that the rotated visual sizes of the circle symbol 11B becomes larger than the unrotated visual size thereof. Therefore, it is only required that the circle symbol 11b has the same actual size as the circle symbol 11a, and that, in a rotation state in which the other circle symbol 11B in the horizontal direction has the largest rotated visual size, the rotated visual size of the circle symbol 11b is larger than the rotated visual size of the circle symbol 11B and also larger than the rotated visual size of the circle symbol 11A on the rotation axis, for example. Thereby, in this rotation state, the circle symbol 11a is detected as having the largest rotated visual size, and the circle symbol 11b is detected as having the next largest rotated visual size, so that the circle symbols 11a and 11b can be specified from the four circle symbols, thereby determining the orientation of the marker 2.

When the circle symbols 11a and 11b of marker 2 satisfy the aforementioned sizes in the rotation states of FIGs. 10A and 10B, it can be said that the marker 2 is satisfying the condition (2).

### Industrial Applicability

As described above, according to the marker of the present invention, as described above, by satisfying the condition (1) or (2), the orientation of the marker can be accurately determined using, for example, at least four circle symbols.

This application claims priority from Japanese Patent Application No. 2017-022818 filed on February 10, 2017. The entire subject matter of the Japanese Patent Application is incorporated herein by reference.

### Reference Signs List

- 1, 2, 3:: marker
- 10, 30:: substrate
- 11, 31:: circle symbol

## Claims

1. A marker comprising:
a substrate, wherein
the substrate has at least four circle symbols on one surface,
two of the four circle symbols are paired and diagonally positioned on the surface,
the other two of the four circle symbols are paired and diagonally positioned on the surface, and
the four circle symbols satisfy the following condition (1) or (2):
Condition (1): one of the four circle symbols is detected to be larger than the other circle symbols in any rotation state of the marker when the marker positioned at a predetermined distance from a predetermined detection position is detected; or
Condition (2): one of the pair of circle symbols and one of the other pair of circle symbols have the same size and are detected to be larger than the other circle symbols in any rotation state of the marker when the marker positioned at a predetermined distance from a predetermined detection position is detected.

2. The marker according to claim 1, wherein
the four circle symbols satisfy the condition (1), and
except for the one circle symbol, the other circle symbols are all of the same size on the surface.

3. The marker according to claim 1, wherein
the four circle symbols satisfy the condition (2), and
except for the one circle symbol of the pair and the one circle symbol of the other pair, the other circle symbols are of the same size on the surface.

4. The marker according to any one of claims 1 to 3, wherein
the four circle symbols are perfect circle symbols.
